# EUROPEAN PATENT APPLICATION

(11) **EP 1 965 112 A1**
(43) Date of publication of application: **03.09.2008**
(21) Application number: 08151367.3
(22) Date of filing: 13.02.2008
(51) Int. Cl.: F16K 31/06, F15B 13/044

(54) **Closed end variable bleed actuator and method of making**

(30) Priority: 27.02.2007 US 680467
(71) Applicant: Delphi Technologies, Inc., Troy, Michigan 48007 (US)
(72) Inventor: Moreno, Alejandro, El Paso, 79912 (US); Carrillo, Conrado, 32326 Juarez (MX)
(74) Representative: Denton, Michael John

(57) **Abstract**

A three-port actuation valve, comprising: a valve housing portion (14) having a supply port opening (16), a control port opening (18) and an exhaust port opening (20) each in selective fluid communication with a central opening of the valve housing portion (14); a housing disk (22) having a stem portion (27) and a disk portion (25), the stem portion (27) being inserted into the central opening of the valve housing portion (14), the stem portion (27) having an exhaust valve opening (35) aligned with the supply port opening (16) and an opening that aligns with the exhaust port opening (35); a poppet (40) for selectively closing the exhaust valve (35) opening, the poppet (40) being slideably received within a central opening of the stem portion (27) for movement between a first position and a second position; and at least one channel (29) disposed in a surface of the disk portion (25), the at least one channel (29) providing fluid communication between a periphery of the disk portion (25) and a central opening of the stem portion (27).

## Description

### TECHNICAL FIELD

Many vehicles are equipped with numerous fluid based systems, e.g., transmission systems, anti-lock brake systems, or traction control systems, that provide comfort and safety to drivers and passengers of these vehicles. Each of these systems usually have one or more actuators, such as hydraulic actuators, that control the flow and/or pressure of the fluid passing through one or more fluid passages between system components when necessary.

### BACKGROUND OF THE INVENTION

Many such actuators have three ports, with the valve being controlled to establish fluid communication through any two of the ports as dictated by the operational circumstances. Typically, the ports are referred to as the supply, control, and exhaust ports. Such valves can be used to provide actuation hydraulic pressure to other components in the control system by moving the valve to establish fluid communication between the supply and control ports. Moving the valve to establish fluid communication between the supply and exhaust ports subsequently can relieve the actuation pressure.

In most vehicle applications, it is desired that the control pressure or flow output between ports be proportional to the commanded electrical current signal provided to the coil assembly of the actuator. In all these cases, the market for these actuator devices has pushed for either normally open (supply is connected to control chamber) or normally high actuators and normally closed (supply is isolated from control chamber) or normally low actuators. Typically, those actuators are uniquely designed for normally high or normally low operation.

For example, electromechanical actuators are used in vehicular applications to control the flow and/or pressure of the supplied fluid through one or several passages. In most cases it is desirable that the control pressure or flow output be proportional to the commanded electrical current signal provided to the coil of the actuator. In most specialized cases, the valve design is customized to the needs of the applications such as in linear pressure control to transmission valves used to control transmission clutches. In this case additional objectives require that the valve be shut off at both extremes of the armature travel to reduce the required system pump flow capacity. Traditional linear magnetic circuit designs are used in conjunction with sophisticated linearized hydraulic designs to achieve discrete armature flow restriction positions that will allow the control pressure proportionality to input current. In all cases, the market for these closed end variable bleed solenoid devices has pushed for normally high and normally low actuators wherein each device is uniquely designed thus duplicating the manufacturing costs.

Accordingly, it is desirable to provide an actuator for use in a hydraulic system wherein the components of the normally closed actuators or normally open actuators may be used in either device thus limiting the associated manufacturing costs.

### SUMMARY OF THE INVENTION

Thus, in accordance with exemplary embodiments of the present invention there is provided an actuator having single parts, which are interchangeable to form a normally open actuator and a normally closed actuator, and features that allow its performance to be comparable to higher precision component actuator designs.

In one exemplary embodiment a three-port actuation valve is provided the three-port actuation valve comprising: a valve housing portion having a supply port opening, a control port opening and an exhaust port opening each in selective fluid communication with a central opening of the valve housing portion; a housing disk having a stem portion and a disk portion, the stem portion being inserted into the central opening of the valve housing portion, the stem portion having an exhaust valve opening aligned with the supply port opening and an opening that aligns with the exhaust port opening; a poppet for selectively closing the exhaust valve opening, the poppet being slideably received within a central opening of the stem portion for movement between a first position and a second position; and at least one channel disposed in a surface of the disk portion, the at least one channel providing fluid communication between a periphery of the disk portion and a central opening of the stem portion.

In another exemplary embodiment a method of making either a normally open or a normally closed three-port actuation valve is provided, the method comprising: molding a valve housing portion, the valve housing portion having a supply port opening, a control port opening and an exhaust port opening each in selective fluid communication with a central opening of the valve housing portion and a housing disk having a portion insert molded into the central opening, the housing disk having an exhaust valve opening in fluid communication with the exhaust port opening and the central opening; and inserting the valve housing portion and a coil assembly into a frame of the actuation valve, a first end of the coil assembly being adjacent to a disk portion of the housing disk, the coil assembly being formed by insert molding a primary plate and a secondary plate to either end of a spool configured to receive a coil for generating an electromagnetic field to provide either a normally high coil assembly or a normally low coil assembly, the normally low coil assembly having the primary plate at the first end of the spool and the secondary plate at an opposite second end of the spool and the normally high coil assembly having the secondary plate at the first end of the spool and the secondary plate at the second end of the spool and the primary plate of the normally high coil assembly having the same configuration as the primary plate being used in the normally low coil assembly and the secondary plate of the normally high coil assembly having the same configuration as the secondary plate of the normally low coil assembly.

A method of making either a normally open or a normally closed three-port actuation valve, the method comprising: molding a valve housing portion, the valve housing portion having a supply port opening, a control port opening and an exhaust port opening each in selective fluid communication with a central opening of the valve housing portion and a housing disk having a portion insert molded into the central opening, the housing disk having an exhaust valve opening in fluid communication with the exhaust port opening and the central opening; inserting a first bushing into an opening of a primary plate; insert molding the primary plate and a secondary plate to either end of a spool configured to receive a coil for generating an electromagnetic field to provide a either a normally high coil assembly or a normally low coil assembly, the normally low coil assembly having the primary plate at a first end of the spool and the secondary plate at an opposite second end of the spool and the normally high coil assembly having the secondary plate at the first end of the spool and the secondary plate at the second end of the spool; winding the coil about the spool; inserting a rod into a plunger to provide a plunger assembly; inserting the plunger assembly into a central opening of either the normally high coil assembly or the normally low coil assembly, a first portion of the rod being slidably received within the first bushing; inserting a second bushing into an opening in the secondary plate, the second bushing slidably receiving a second portion of the rod; inserting a poppet for selectively closing the exhaust valve opening, into the central opening of the housing disk, a portion of the poppet being slidably received within a bushing inserted into the housing disk; inserting a supply port valve assembly into the housing the supply port valve assembly being configured to selectively open and close the supply port in response to movement of the poppet; inserting the valve housing portion into a frame portion; inserting the coil assembly into the frame portion so that the first end is adjacent to the housing disk; and securing a screw plate to the frame portion, the screw plate securing the coil assembly and the valve housing portion to the frame.

### BRIEF DESCRIPTION OF THE DRAWINGS

Figure 1 illustrates an exploded perspective view of a closed end variable bleed actuator constructed in accordance with an exemplary embodiment of the present invention;
Figures 2A-2B are cross-sectional views of a normally open closed end variable bleed actuator constructed in accordance with an exemplary embodiment of the present invention;
Figures 3A-3B are cross-sectional views of a normally closed end variable bleed actuator constructed in accordance with an exemplary embodiment of the present invention; and
Figures 4-13 illustrates an assembly sequence of a closed end variable bleed actuator constructed in accordance with an exemplary embodiment of the present invention.

### DESCRIPTION OF THE PREFERRED EMBODIMENTS

Exemplary embodiments of the present invention are directed to an actuator having single parts, which are interchangeable to form two types of a closed end variable bleed actuator namely, a normally low actuator and a normally high actuator. In addition and in accordance with an exemplary embodiment of the present invention, the interchangeable parts allow each of the actuators to have performance comparable to higher precision component actuator designs. Exemplary embodiments of the present invention are also directed to a method of making a closed end variable bleed actuator that significantly improves load/alignment of the armature (rod/plunger assembly, poppet and ball) and provides improved magnetic linearity and force.

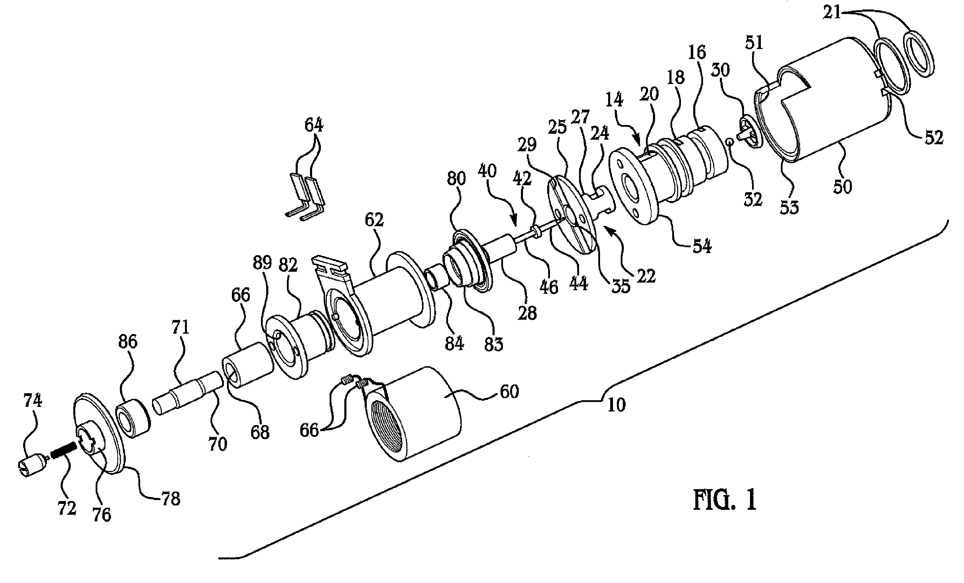

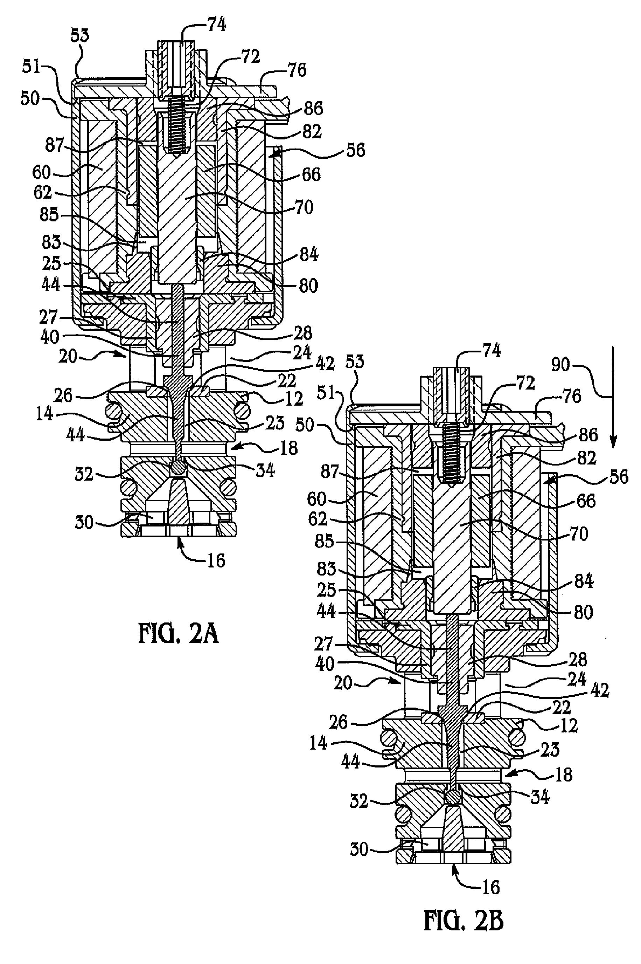

Referring now to Figure 1, there is illustrated an exemplary embodiment of an actuator 10 in accordance with an exemplary embodiment of the present invention. In accordance with an exemplary embodiment, actuator 10 is a closed end variable bleed solenoid device. Actuator 10 includes a housing or a valve-housing portion 14 for housing the valving components of actuator 10. The housing defines at least a supply port 16, a control port 18, and an exhaust port 20 for providing fluid communication between vehicle components, which can be seen in Figure 2. In accordance with an exemplary embodiment of the present invention, the valve housing portion has a central opening 23, which interconnects each of the supply port, the control port, and the exhaust port. As will be discussed herein components are received within the valve-housing portion to provide the selective fluid communication between the supply port, the control port, and the exhaust port.

In accordance with an exemplary embodiment, the housing 14 includes at least two radial grooves or features for receiving O-rings 21 for sealing purposes. In accordance with an exemplary embodiment housing 14 is formed from a moldable material (e.g., plastic or other polymeric material) that is capable of being insert molded about other components, which will be discussed herein. In one non-limiting exemplary embodiment, housing 14 is constructed out of an easily molded material suitable for an injection molding process (e.g., Polyphthalamide (PPA)). Of course, other suitable plastic materials or equivalents thereof could be used to construct housing 14. In accordance with an exemplary embodiment, the supply port 16 will receive fluid from a reservoir (not shown) in the vehicle in which the actuator is located or from some other source, and exhaust port 20 may exhaust fluid to the reservoir or to some other component or to the atmosphere. In one exemplary embodiment, control port 18 is in fluid communication with one or more components of a vehicle control system (e.g. transmission system) and the supply port 16. The supply port 16 is in fluid communication with control port 18 during a control configuration. The control port 18 is in fluid communication with the exhaust port 20 during an exhaust configuration.

A housing disk or housing plate 22 is positioned within valve housing 14. More particularly, housing disk 22 is insert molded with housing 14. In accordance with an exemplary embodiment, the housing disk 22 has an aperture 24 that provides fluid flow or fluid communication to exhaust port 20. As illustrated, housing disk or housing plate 22 has a disk portion 25 and a central stem portion 27. Central stem portion 27 of housing disk 22 provides a seat or opening 26 that permits fluid flow or fluid communication between control port 18 and exhaust port 20. In addition and in accordance with an exemplary embodiment aperture 24 is also located in stem portion 27.

In accordance with an exemplary embodiment housing disk 22 is made of a ferromagnetic material so that a generated electromagnetic field can travel through it under operational circumstances. In addition and in accordance with an exemplary embodiment, the housing disk 22 is also insert molded within housing 14 wherein plastic comprising the valve housing is injected about the housing disk positioned in the dies or cavities defining the valve housing. In other words the liquid plastic is injected about the housing disk and a mechanical bond between the plastic and housing disk is formed. In one non-limiting exemplary embodiment disk portion 25 has openings 17 for receipt of the liquid plastic to assist in the mechanical bond to the valve housing. The insert molding of the housing disk with the valve housing achieves alignment of the openings or valve seat of the housing disk and the openings of the valve housing thus negating the need for high precision components. For example, the housing disk has an integrated control to exhaust seat and also has a flow path to the exhaust opening of the valve housing. In one exemplary embodiment the housing disk is manufactured using a deep drawn/stamped process, which of course occurs before the housing disk is insert molded into the housing. In addition, the housing disk 22 is constructed out of a ferromagnetic material wherein metal particles in the fluid are attracted to the magnetic flux path traveling therethrough. In one non-limiting exemplary embodiment, housing disk 22 is constructed out of 1008/1010 CR steel. Of course, other suitable steel types or equivalents thereof could be used to construct housing disk 22. In addition, the housing disk 22 is also configured to have a channel or channels 29 in a surface 31 of the housing disk or plate so that fluid may flow through the armature and the housing disk provides a damping feature as the rod of the actuator moves toward a bushing disposed in the housing. In another non-limiting exemplary embodiment the disk portion has locating apertures 37 for locating or aligning the disk portion when the same is insert molded to the valve housing (e.g., locating feature found in molding die) so that opening 24 of the stem portion aligns with opening 20 of the valve housing. In addition, the molding process will allow plastic to flow through apertures 37 creating a key for aligning the housing disk and valve housing with the coil assembly when the two are inserted into the frame. In addition, this flow of plastic through apertures will also provide a mechanical bond between housing disk 22 and valve housing 14.

In accordance with an exemplary embodiment, a hydraulic bushing or poppet bushing 28 is positioned within a central cavity 33 of the housing disk 22. The bushing 28 aligns the poppet with respect to the exhaust valve opening of the housing disk. In accordance with an exemplary embodiment there is an interference fit between the housing disk 22 and the hydraulic bushing 28. The hydraulic bushing 28 provides an opening for slidably receiving a portion of the poppet.

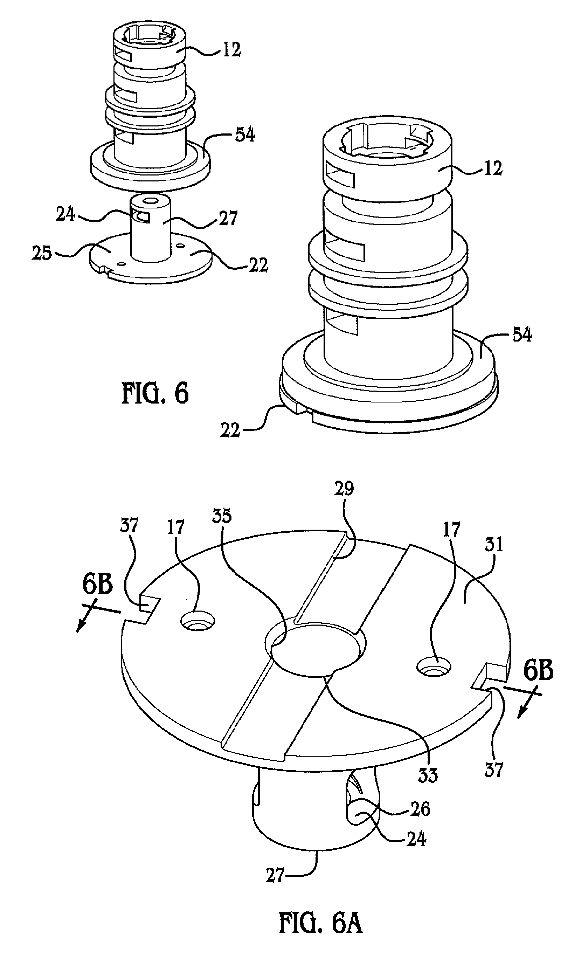

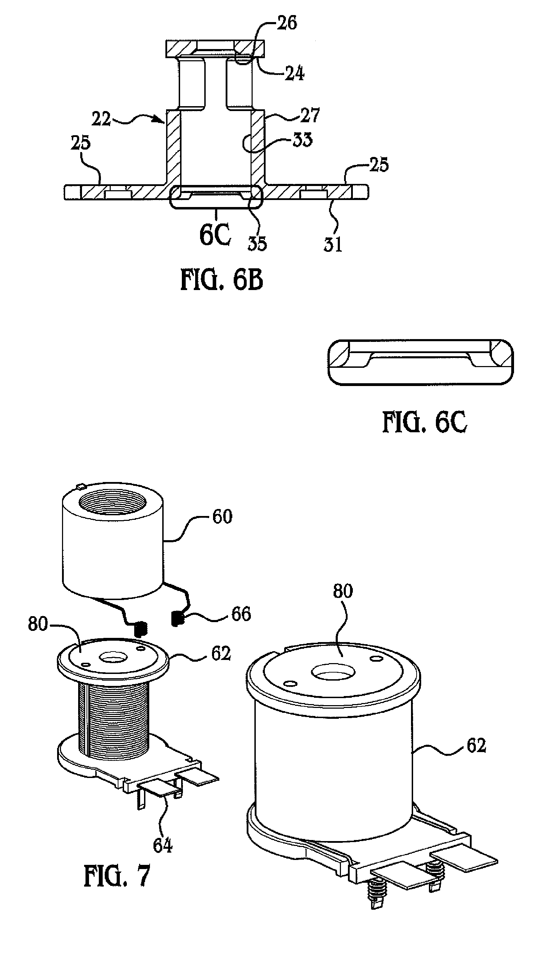

In addition and in accordance with an exemplary embodiment of the present invention and referring now to Figures 6-6C, central cavity 33 has a flanged area or peripheral opening 35 that is larger than the inner diameter of the central cavity and is in fluid communication with at least one channel 29 formed in surface 31 of the housing disk 22. In accordance with an exemplary embodiment, peripheral opening 35 is in fluid communication with the outer periphery of the housing disk via channel 29 so that fluid compressed by the rod is pushed out through channels 29 thus providing a dampening feature.

More specifically, and as the rod is actuated by the plunger the rod makes contact with a rod portion of the poppet. As shown in at least Figures 1-3B, the diameter of the rod 70 is greater than the rod portion 44 of the poppet thus, and as the rod 70 moves towards and away from the opening 35 of the housing disk the area between the end of the rod and the opening 35 of the housing disk increases and decreases. Moreover and since the actuator is disposed in a wet environment (e.g., fluid disposed between the end of the rod 70 and opening 35) it is desirable to have fluid pathways through the surface of the housing disk in order to accommodate for the increase and decrease of the area proximate to opening 35. In addition, metal particles in the fluid may be attracted to the housing disk and can be pushed into the channels 29 thus preventing the same from adversely affecting operation of the actuator.

Referring back now to Figures 1-13, a supply port valve assembly comprising a ball retainer 30 with a cooperating ball 32 is located within valve housing 14 and above housing disk 22 as shown. The ball retainer 30 prevents lateral motion of ball 32, such that ball 32 is aligned with a seat opening 34 defined by housing 14. In an exemplary embodiment, ball retainer 30 is manufactured using a molded process and in one non-limiting exemplary embodiment is constructed out of Polyphthalamide (PPA). Of course, other suitable plastic materials or equivalents thereof could be used to construct ball retainer 30. The ball 32 is configured to move between a blocked position in which fluid communication is permitted between control port 18 and exhaust port 20, and an unblocked position in which fluid communication is permitted between supply port 16 and control port 18. As shown, there is a ball to cone seat arrangement (e.g., seat opening 34) in order to provide for supply to control flow control. In an exemplary embodiment, ball 32 is manufactured using a ground process and in one non-limiting exemplary embodiment is constructed out of chromium steel. Of course, other suitable steel types or equivalents thereof could be used to construct ball 32. When ball 32 is in the unblocked position, ball 32 is moved away from seat opening 34 permitting fluid flow between supply port 16 and control port 18, which in an exemplary embodiment is considered as the control configuration. When ball 32 is in the blocked position, ball 32 is moved to seal seat opening 34, permitting fluid flow between control port 18 and exhaust port 20, which in one exemplary embodiment is considered as the exhaust configuration.

For a more detailed explanation of a suitable ball retainer, see United States Patent No. 6,880,570, the contents of which are incorporated herein by reference thereto.

In accordance with an exemplary embodiment a poppet 40 is slidably disposed within housing disk 22. The poppet 40 includes a seating portion 42 that is tapered and aligned with opening 26 of housing disk 22, such that when seating portion 42 abuts a portion of housing disk 22 blocking opening 26, fluid communication between control port 18 and exhaust port 20 is prevented and fluid communication between supply port 16 and control port 18 is permitted. In one exemplary embodiment, poppet 40 is manufactured using a machined process and in one non-limiting exemplary embodiment is constructed out of 304 stainless steel. Of course, other suitable steel types or equivalents thereof could be used to construct poppet 40. The poppet 40 defines a ball end 44 located at one end and a shaft 46 at another end. The shaft 46 of poppet 32 is slideably centrally disposed between hydraulic bushing 28. The hydraulic bushing 28 provides alignment to poppet 40. The ball end 44 of poppet 40 is slidably disposed between housing disk 22 as shown, such that when ball end 44 slides toward and contacts ball 32 to move ball 32 away from seat opening 34, fluid communication is permitted between supply port 16 and control port 18. The poppet 40 can move up and down along opening 26 of housing disk 22 between an exhaust configuration, in which seating portion 42 of poppet 40 is distanced from opening 26 of housing disk 22 to establish fluid flow from control port 18 through opening 26 to exhaust port 20, and a control configuration, in which seating portion 42 of poppet 40 mates with a portion of housing disk 22 to block opening 26 to establish fluid flow from supply port 16 through seat opening 34 to control port 18.

Actuator 10 also includes a frame 50 engaged with valve housing 14 for housing the energizing components of actuator 10. The frame 50 and housing 14 are attached to one another by a mechanical means. Preferably, a peripheral surface of frame 50 includes localized contact features 52 that correspondingly engage with a radial surface 54 of housing 22. In one non-limiting exemplary embodiment the features 52 are configured to contact the housing as it is inserted therein and the features are configured to deflect as the valve housing is completely inserted therein. In one non-limiting exemplary embodiment, frame 50 is made of a ferromagnetic material using a deep drawing process. One contemplated material 1008/1010 CR steel of course, other suitable types of material are contemplated to be within the scope of the present invention. The frame 50 creates a portion of the flux path for an electromagnetic field, which moves the plunger and accordingly the poppet 40 between the control configuration and the exhaust configuration.

The frame 50 generally houses a coil assembly 56. The coil assembly 56 includes an electromagnetic coil 60 wound around a coil spool 62 coaxially mounted within frame 50 and includes terminal ends 64 extending therefrom that are electrically connected to end wires 66. In one non-limiting exemplary embodiment, coil spool 62 is constructed out of an easily molded material such a plastic suitable for an injection molding process (e.g., Polyphthalamide (PPA)). Of course, other suitable plastic materials or equivalents thereof could be used to construct coil spool 62. The electromagnetic coil 60, which when supplied with an excitation generates an electromagnetic field for moving poppet 40 between the control configuration and the exhaust configuration when energized by a source (not shown) connected to terminal ends 64.

Actuator 10 further includes a plunger 66 located within frame 50 and electromagnetically coupled to electromagnetic coil 60. The plunger 66 includes a cavity 68 for receiving a rod 70 in operable communication with poppet 40. The plunger 66 is constructed out of ferromagnetic material and can be moved by the electromagnetic field generated by the electromagnetic coil 60 pushing rod 70 against shaft 46 of poppet 40. In one exemplary embodiment, plunger 66 is manufactured using a machined process and in one non-limiting exemplary embodiment is constructed out of 1215 CR steel. Of course, other suitable steel types or equivalents thereof could be used to construct plunger 66. The plunger 66 is configured to move between a first position and a second position when electromagnetic coil 60 is energized and de-energized. In the first position, plunger 66 moves rod 70 so that rod 70 pushes poppet 40 such that seating portion 42 of poppet 40 abuts a portion of housing disk 22 blocking opening 26. In the second position, plunger 66 moves rod 70 so that rod 70 moves away from shaft 46 of poppet 40 so that seating portion 42 of poppet 40 moves away from a portion of housing disk 22 unblocking opening 26.

The rod 70 is a rigid metal that moves with respect to plunger 66 and defines a surface 71 that extends therefrom and contacts the internal walls of plunger 66 when plunger 66 receives rod 70 via cavity 68. In doing so, an interference fit between plunger 66 and rod 70 is provided. In accordance with an exemplary embodiment the plunger is pressed onto the rod to guarantee the position of the plunger relative to the primary air gap edge and the rod is held inside the coil assembly via the secondary plate bushing. In one exemplary embodiment, rod 70 is manufactured using a machined process and in one non-limiting exemplary embodiment is constructed out of 304 stainless steel. Of course, other suitable steel types or equivalents thereof could be used to construct rod 70. When plunger 66 moves to the first position from the second position, rod 70 moves towards ball retainer 30 pushing seating portion 42 against a portion of housing disk 22, which in turn allows ball end 44 of poppet 40 to move ball 32 away from seat opening 34. In doing so, the control configuration is operated. When plunger 46 moves to the second position from the first position, rod 70 moves away from ball retainer 30 moving seating portion 42 away from opening 26 of housing disk 22, which in turn allows ball end 44 of poppet 40 to move ball 28 towards seat opening 30. In doing so, the exhaust configuration is operated.

A spring 72 is provided to bias plunger 66 upward relative to Figure 2 and, hence, to bias rod 70 to the control configuration when electromagnetic coil 60 is energized. The spring 72 sits within a cavity defined by rod 70 and positioned atop a screw 74. In one exemplary embodiment, screw 74 is machined or headed within a cavity defined by a screw plate 76 and operates to adjust preload on spring 72. The screw plate 76 includes a flange 78 or peripheral edge that is received and engaged by a shoulder 51 defined on frame 50. In addition, and above shoulder 51 a portion of the frame wall is thinned out to provide a localized frame contact feature or features (e.g., tabs) 53, which are bent over onto screw plate 76 in order to secure the same to the frame. In one non-limiting exemplary embodiment, the feature 53 is a thinned wall that extends around shoulder 51 and is bent over onto the edge of the screw plate once it has bottomed out on the shoulder thus sending all axial loads through the frame. Alternatively, the wall can be configured to have a plurality of tabs that are bent over.

In yet another alternative exemplary embodiment, the screw plate and the peripheral portion of the frame each comprise complimentary features to engage each other when the screw plate is pressed onto the frame while still passing all of the axial loads through the frame and not the valve or coil assemblies. In accordance with an exemplary embodiment screw plate 76 is formed from a ferromagnetic material (e.g., 1008/1010 CR steel and equivalents thereof) wherein the screw plate completes the flux path at the top of the magnetic circuit. Of course, other suitable steel types or equivalents thereof could be used to construct screw plate 76. By forming the screw plate out of a ferromagnetic material the screw plate can be a magnetic flux carrying component, which is particularly useful when the primary plate is located adjacent to the screw plate and the outer diameter of the primary plate does not protrude all the way out to the inner diameter of the frame thus, the screw plate that is in contact with both items completes the magnetic circuit. The same would also be true if the secondary plate was located proximate to the screw plate. Similarly, the disk portion of the housing disk completes the magnetic circuit between the frame and the primary or secondary plate.

As such, the energizing components within frame 50 are secured when the edge of the screw plate engages the shoulder portion of the frame 50 and the screw plate is pressed onto and interlocked or an interference fit is provided between the outer diameter of the screw plate and the inner diameter of the frame defining the shoulder portion and thereafter the frame localized contact features 53 are bent over to secure the screw plate therein.

In accordance with an exemplary embodiment of the present invention the axial loading forces are not transferred to the coil assembly as the screw plate bottoms out or stops at shoulder 51 and thereafter the localized contact features are bent down onto the screw plate and the localized contact features 52 at the other end of the frame contact the valve housing in order to secure the coil assembly and the valve housing in the frame, wherein the localized features are in one non-limiting embodiment configured to deflect as the valve housing is inserted into the frame (e.g., features 52 contact the valve housing before it is fully inserted into the frame). This method of securement prevents residual stresses from traveling through the actuator core as the frame to screw plate interface provides a secondary load path (e.g., load path traveling through the outer housing or frame portion).

A primary plate 80 and a secondary plate 82 made of a rigid metal are located within frame 50 in a first configuration wherein the coil assembly is used for a normally low closed end variable bleed device and a second configuration wherein the coil assembly is used for a normally high closed end variable bleed device. In accordance with one non-limiting exemplary embodiment, primary plate 80 is constructed out of a ferromagnetic material (e.g., 1215 CR steel and equivalents thereof) and secondary plate 82 is also constructed out of a ferromagnetic material (e.g., 1008/1010 CR steel and equivalents thereof). In accordance with an exemplary embodiment of the present invention the primary plate 80 and the secondary plate 82 are interchangeable between first and second configurations, which allows common components (e.g., spool, coil, primary plate and secondary to plate) to be used to provide a coil assembly for either a normally high closed end variable bleed device or a normally low closed end variable bleed device, which will be discussed in greater detail below. In other words, the primary plate or the configuration thereof for the normally high actuator is the same for the normally low actuator and the secondary plate of the configuration thereof for the normally low actuator is the same for the normally high actuator.

In addition and in accordance with an exemplary embodiment, the primary plate and the secondary plate are each insert molded to the coil spool or bobbin wherein liquid plastic for the bobbin is injected about the primary and secondary plates positioned in the dies or cavities used to form the bobbin and a mold core pin (not shown) is inserted along the axis defined by line 81 wherein and during the injection molding process the mold core pin aligns the primary and secondary plates with each other and within the bobbin eliminating the need for high precision components and simplifying assembly of exemplary embodiments of the present invention. In other words, the mold core pin aligns the primary and secondary plates in the die and the liquid plastic used to form the bobbin is injected about the primary and secondary plates wherein a mechanical bond between the plastic and the primary and secondary plates is formed.

In accordance with an exemplary embodiment of the present invention the primary and secondary plates are capable of being insert molded on either side of the coil assembly or bobbin and the normally high actuator or normally low actuator is differentiated from each other by the configuration of the primary and secondary plates relative to each other and the terminals of the bobbin assembly or relative to the housing disk.

In the first configuration, and as illustrated in Figure 2A, seating portion 42 of poppet 40 is positioned away from a portion of the housing disk 22 when the electromagnetic coil 60 is de-energized such that opening 26 is not blocked by seating portion 42, permitting fluid flow between control port 18 and exhaust port 20. In this configuration, when the electromagnetic coil 60 is de-energized, the pressure from supply port 16 pushes ball 32 such that ball 32 seals seat opening 34. This is referred to as a normally low configuration where the hydraulic pressure is normally low.

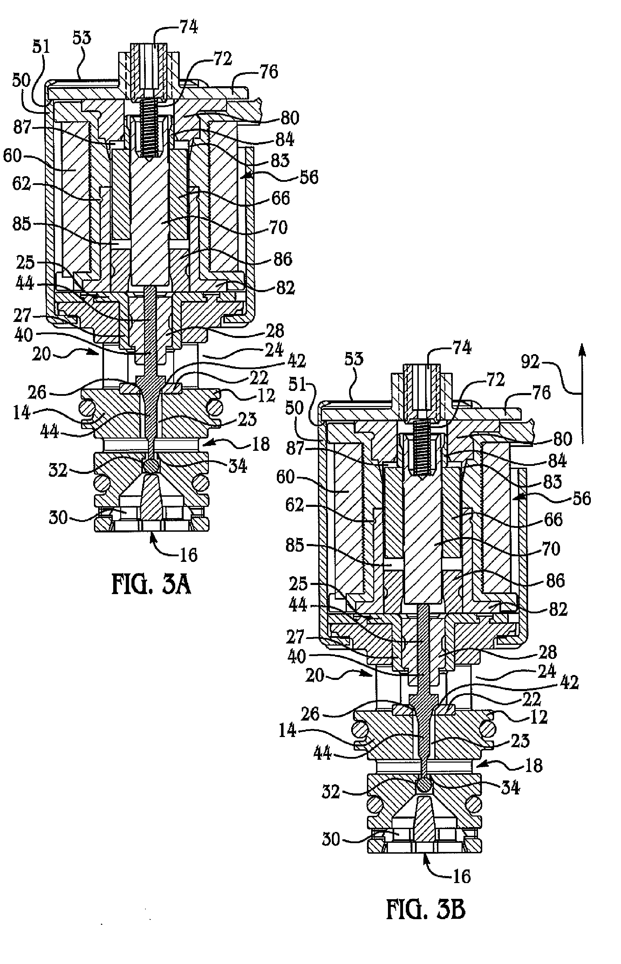

In the second configuration, as illustrated in Figure 3A, seating portion 42 of poppet 40 abuts a portion of housing disk 22 when the electromagnetic coil 42 is de-energized such that opening 26 is blocked by seating portion 42, preventing fluid flow between the control port 18 and exhaust port 20 and permitting fluid flow between the supply port 16 and control port 18. This is referred to as a normally high configuration where the hydraulic pressure is normally high. As shown, the primary plate and the secondary plate are merely reversed to provide the coil assembly for either configuration. Again, the reversal is easily achieved by the insert molding process and the use of a mold core pin to align the primary and secondary plates.

Referring back to Figure 2A, the coil spool 62 is insert molded with primary plate 80 and secondary plate 82. More specifically, in the normally low configuration, primary plate 60 is located on the axial end of coil spool 62 near housing disk 22 and disposed between coil spool 62 and a primary bushing 84 is inserted into an opening of the primary plate in an interference fit prior to the same being insert molded into the coil assembly. In one non-limiting exemplary embodiment, primary bushing 84 is manufactured out of brass. Of course, other suitable brass types or equivalents thereof could be used to construct primary bushing 84.

In an exemplary embodiment, a protruding peripheral wall 83 defined by primary plate 80 extends in an angle to a portion of one end of plunger 66 for electromagnetically coupling primary plate 80 to plunger 66 and for creating a flux path for the electromagnetic field to travel through. The wall 83 defines a gap 85 between primary plate 80 and plunger 66 as shown. The secondary plate 82 is located on another axial end of coil spool 62 away from housing disk 22 and disposed between coil spool 62 and a secondary bushing 86 in an interference fit. In an exemplary embodiment, secondary bushing 86 is inserted into the secondary plate after the same has been insert molded into the housing. In one non-limiting exemplary embodiment bushing 86 is constructed out of brass of course, other suitable brass types or equivalents thereof could be used to construct secondary bushing 86.

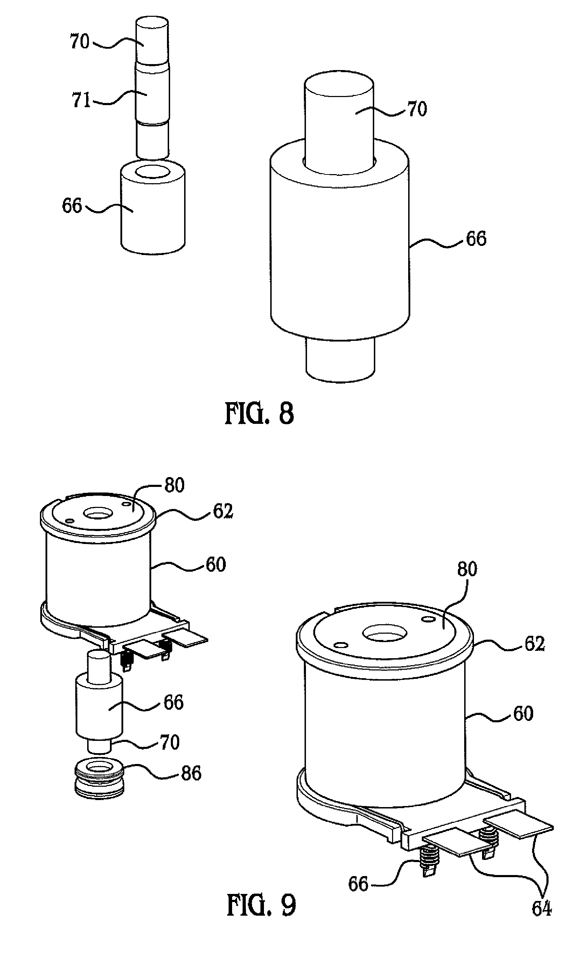

As shown in Figures 8 and 9, the plunger 66 is secured to the rod and the rod and plunger is inserted into an inner opening 89 of the secondary plate prior to bushing 86 being inserted into the coil assembly and on the end of the rod closest to the screw plate. In other words, the plunger is inserted onto the rod and the rod and plunger assembly is inserted into the coil assembly via opening 89 of the secondary plate and one end is received in the open of first bushing 84 of the primary plate and thereafter bushing 86 is inserted into opening 89 wherein there is an interference fit between bushing 86 and secondary plate 82 while the rod is slidably received therein. Note this assembly process is the same regardless of which side the primary plate is on as the secondary plate 82 has the larger opening 89 configured to receive the rod and plunger assembly.

As shown another gap 87 is defined between plunger 66 and secondary bushing 86. Both gaps 85 and 87 provide areas in which plunger 66 can move between the exhaust configuration and the control configuration and can be adjusted in gap size based on the application by for example adjusting screw 74 in screw plate 76 to adjust the force being applied by spring 72 (e.g., calibrate the preload of spring 72). The dual bushings 84 and 86 eliminate diaphragm spring variables (e.g., load/alignment). In addition, the hydraulic bushing 28 is out of the fluid flow path.

In addition, and as shown in at least Figures 2A and 3A, exemplary embodiments of the present invention eliminate the edge contact between sliding components. In this normally low configuration, when the electromagnetic coil 60 is energized, plunger 66 moves poppet 40 such that seating portion 42 abuts a portion of housing disk 22 so that opening 26 is blocked as illustrated in Figure 2B. By doing so, ball 32 is moved away from seat opening 34 permitting fluid flow between supply port 16 and control port 18. As shown in this configuration, when the electromagnetic coil 60 is energized, plunger 66 is drawn to primary plate 80 in the direction of arrow 90.

In contrast, as shown in Figure 3A, the normally high configuration has primary plate 60 located on one axial end of coil spool 62 away from housing disk 22 and disposed between coil spool 62 and primary bushing 84 in an interference fit. In this configuration, secondary plate 64 is located on the other axial end of coil spool 62 near housing disk 22 and disposed between coil spool 62 and secondary bushing 86 in an interference fit. In this configuration, peripheral wall 83 of primary plate 80 extends in an angle to a portion of another end of plunger 66 for electromagnetically coupling primary plate 80 to plunger 66 and for creating a flux path for the electromagnetic field to travel through as shown. In this configuration, gap 85 is defined between secondary bushing 86 and plunger 66 and gap 87 is defined between primary plate 80 and plunger 66 as shown. In this normally high configuration, when the electromagnetic coil 42 is energized, plunger 66 moves poppet 40 such that seating portion 42 moves away from housing disk 22 so that opening 26 is unblocked as illustrated in Figure 3B. By doing so, ball 32 is moved towards seat opening 34 permitting fluid flow between control port 18 and exhaust port 20. As shown in this configuration, when the electromagnetic coil 60 is energized, plunger 66 is drawn to primary plate 80 in the direction of arrow 92.

It should be understood that primary plate 80 inserted in the normally low configuration is identical to primary plate 80 inserted in the normally high configuration. Additionally, secondary plate 82 inserted in the normally low configuration is identical to secondary plate 82 inserted in the normally high configuration. As such, the energizing parts in the normally low configuration can easily be used to form the normally high configuration and vice versa. In doing so, separately formed high precision components for forming a normally low actuator and a normally high actuator can be eliminated. Furthermore, the actuator 10 described in the exemplary embodiments above provides ease in manufacture from one configuration to the other.

In the normally low configuration and the normally high configuration, the electromagnetic field travels through a portion of frame 50, secondary plate 82, plunger 66, peripheral wall 83, primary plate 82, and housing disk 22 creating the electromagnetic field for moving poppet 40 between the exhaust configuration and the control configuration as described above.

In accordance with an exemplary embodiment of the present invention an exemplary method of assembling actuator 10 is provided in that the assembly process eliminates load/alignment issues and provides improved magnetic linearity and force. The exemplary method described below is for forming actuator 10 in a normally low configuration. However, it should be understood that the method is also used to form actuator 10 in a normally high configuration with the exception of switching the locations of the primary plate 80 and secondary plate 82 more specifically by placing primary plate 80 in the location of secondary plate 82 and placing secondary plate 82 in the location of primary plate 80 in the normally low configuration.

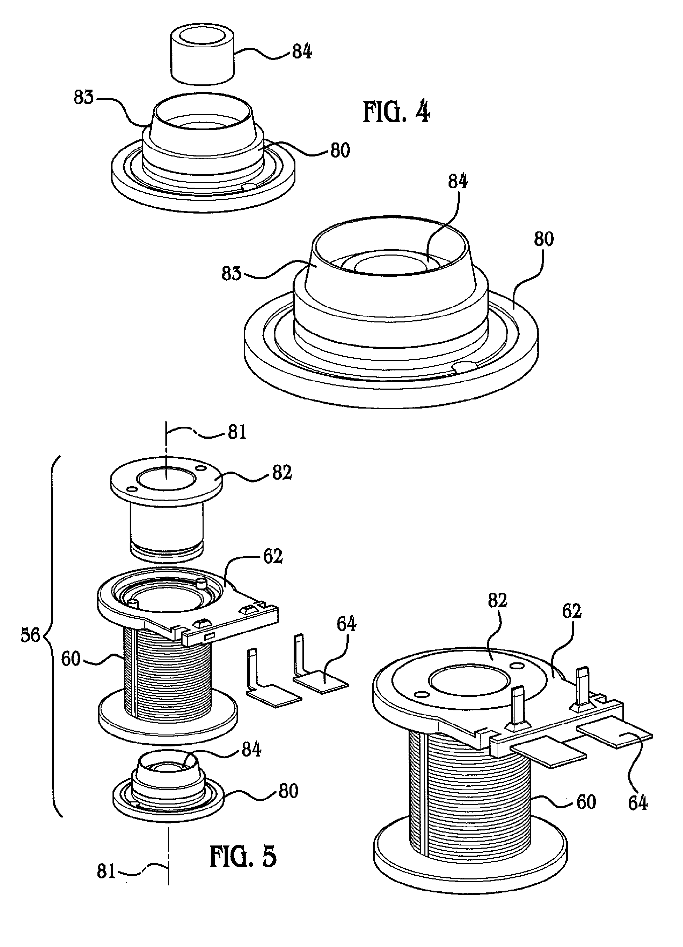

The exemplary method generally includes pressing primary bushing 84 into a cavity defined by primary plate 80 such that at least a portion of peripheral wall 83 engages with at least a portion of the outer surface of primary bushing 84 as illustrated in Figure 4, wherein an interference fit is provided. Then, insert molding primary plate 80, secondary plate 82, and terminals 64 within coil spool 62, thereby providing component alignment as illustrated in Figure 5.

Next and in accordance with an exemplary embodiment of the present invention the housing disk is insert molded to/with housing 14 as illustrated in Figure 6. Accordingly and by insert molding the housing disk with the valve housing portion the housing disk and its valve seat are aligned with the poppet without requiring the need for expensive high precision components as the housing disk may be aligned with a mold pin in order to ensure that the openings of the housing disk are aligned with the openings of the valve housing. In accordance with an exemplary embodiment the housing disk has an integrated control to exhaust seat and also has the flow path to the exhaust of the valve. Accordingly, the exhaust seat is positioned to align with the tapered sealing portion 42 of the poppet, which is aligned with the poppet bushing placed in the central opening of the housing disk. As discussed herein, the plunger is pressed to the rod to guarantee the position relative to the primary air gap edge and the rod is held inside the bobbin assembly via the secondary plate bushing.

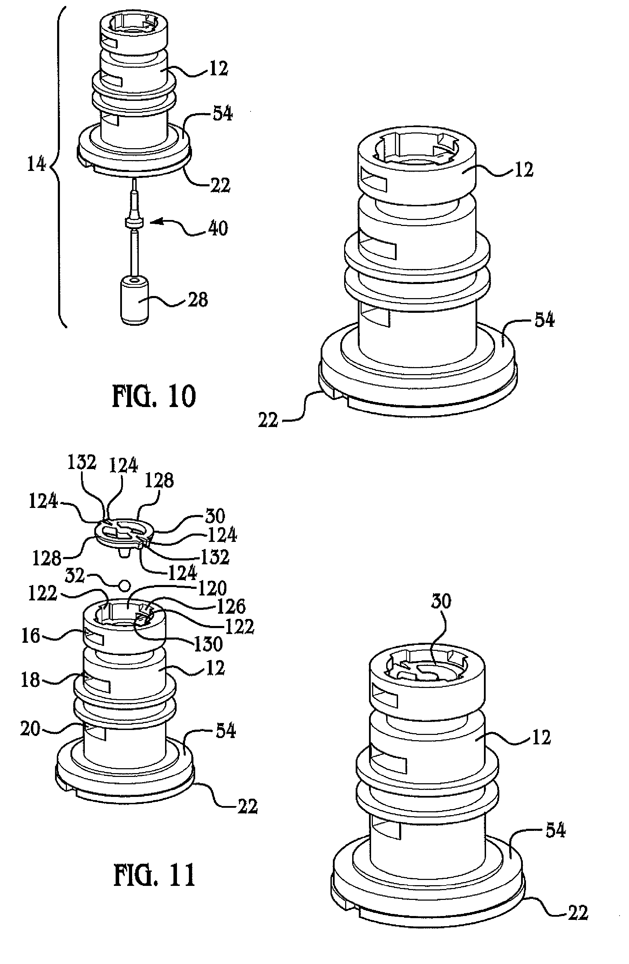

The method also includes winding electromagnetic coil 60 around coil spool 62 as illustrated in Figure 7. Then, pressing rod 70 into plunger 66 such that flanged surface 71 of rod 70 is pressed against the inner walls of plunger 66 as illustrated in Figure 8. Next, inserting plunger 66 in place and pressing secondary bushing 84 in position such that rod 70 presses against the internal walls of secondary bushing 86 as illustrated in Figure 9. The method further includes inserting poppet 40 in place within housing 14, such that ball end 44 aligns with opening 26 of housing disk 22, while pressing hydraulic bushing 28 in position within housing disk 22 as illustrated in Figure 10. In addition, the method includes positioning ball 32 and attaching (snapping, heat-staking, ultrasonic weld, etc.) ball retainer 30 in place above housing 22 as illustrated in Figure 11. Referring now to Figure 11 and in one non-limiting exemplary embodiment, valve housing 14 has an opening 120 for receipt of the ball retainer therein. Opening has a pair of slots 122 for engaging resilient tab features 124 of the ball retainer as the ball retainer is inserted therein. Also positioned on the walls of opening 120 are a pair of ramped or inclined surfaces 126, which are angularly configured to guide a peripheral edge 128 of the ball retainer into opening 120. Thereafter, and as the ball retainer is snapped into place edge 128 engages a lip 130 formed below each ramp. In accordance with an exemplary embodiment the lip 130 is a portion of the opening defining the supply port opening 16. In addition, and as the ball retainer 30 is inserted into the opening the tab features deflect towards each other or towards a gap 132 located between the tab features and the peripheral edge slides down inclined surface 126 until it is engaged by lip 130. Of course, this is but one way to secure the ball retainer to the valve housing and exemplary embodiments of the present invention contemplate alternative methods for securing the ball retainer to the valve housing.

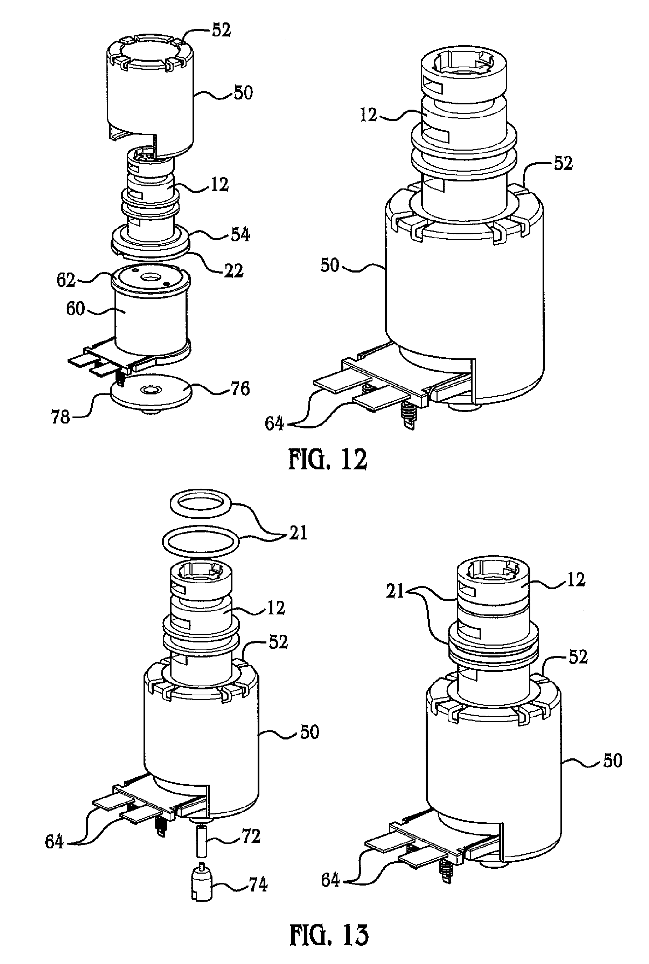

The method also calls for positioning housing 14 above coil assembly 56 and pulling frame 50 over housing 14 and over coil assembly 56, where localized contact features 52 are pressed and interlocked on radial surface 54 of housing 14 and flange 78 of screw plate 76 is interlocked with contact features 53 on frame 50 and screw plate 76 is engaged with shoulder 51 as illustrated in Figure 12. In accordance with an exemplary embodiment of the present invention screw plate 76 contacts shoulder 51 positioned on the bottom periphery of the frame so that the linear compression forces are applied directly to the frame and the stroke or radial/axial positioning of the rod and poppet are not adversely affected by the final assembly steps namely, the securement of the screw plate to the frame by bending the peripheral wall 53 over the screw plate.

The coil assembly 56 is then properly housed within frame 50. The method also includes placing spring 72 into position within rod 70 and turning screw 74 into position within screw plate 76 based on the application as illustrated in Figure 13.

Finally, the method also includes placing O-rings 21 on the corresponding radial grooves on housing 14 also illustrated in Figure 13. The method described above eliminates load/alignment issues and provides improved magnetic linearity and force.

The coil assembly and the valve housing assembly are held together by the frame which includes crimping features 53 (e.g., peripheral wall 53 or alternatively a plurality of tabs) and localized contact tabs or features 52 to hold all the components together. In addition, the frame completes the flux path through the housing disk, the frame, the screw plate, the primary and secondary windings and the plunger.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the present application.

## Claims

1. A three-port actuation valve, comprising:
a valve housing portion having a supply port opening, a control port opening and an exhaust port opening each in selective fluid communication with a central opening of the valve housing portion;
a housing disk having a stem portion and a disk portion, the stem portion being inserted into the central opening of the valve housing portion, the stem portion having an exhaust valve opening aligned with the supply port opening and an opening that aligns with the exhaust port opening;
a poppet for selectively closing the exhaust valve opening, the poppet being slideably received within a central opening of the stem portion for movement between a first position and a second position; and at least one channel disposed in a surface of the disk portion, the at least one channel providing fluid communication between a periphery of the disk portion and a central opening of the stem portion.

2. The three-port actuation valve as in claim 1, further comprising:
a coil assembly having a spool, a winding, a primary plate and a secondary plate, the spool having a first end and a second end the first end being proximate to the surface of the disk portion, the primary plate being configured to be secured to either the first end or the second end of the spool and the secondary plate being secured to either the first end or the second end of the spool, the coil assembly being configured to generate an electromagnetic field in response to an excitation and the electromagnetic field moving the poppet between the first position and the second position and a portion of the electromagnetic field travels through a portion of the housing disk so that a plunger secured to a rod is drawn towards the primary plate, the rod being configured to move the poppet between the first and second positions.

3. The three-port actuation valve as in claim 2, further comprising:
a frame portion configured to receive a portion of the valve housing and the coil assembly and the coil assembly and the valve housing being secured to frame by a screw plate that engages a shoulder of the housing portion; and
a plurality of tabs disposed in the frame for engaging the valve housing after the coil assembly and the valve housing are secured to the frame by the screw plate.

4. The three-port actuation valve as in claim 3, wherein the screw plate engages the shoulder of the frame when the coil assembly is inserted into the frame, the screw plate engaging the shoulder prior to a predetermined force being applied to the housing disk and the coil assembly by the screw plate and the frame comprises features for engaging the screw plate after the screw plate has been inserted into the frame.

5. The three-port actuation valve as in claim 2, wherein the primary plate and the secondary plate each have a bushing inserted therein and the poppet is moved from the first position to the second position by a rod secured to a plunger, the rod making contact with the poppet at one end and being slidably received in the bushing at the other end.

6. The three-port actuation valve as in claim 3, further comprising a biasing spring and an adjustment screw, the adjustment screw threadingly engaging a threaded opening in the screw plate and the biasing spring being positioned between an end of the adjustment screw and the other end of the rod.

7. The three-port actuation valve as in claim 3, wherein an electromagnetic field of the coil travels through a path defined by the primary plate, the secondary plate, the housing disk, the frame, the screw plate and the plunger.

8. The three-port actuation valve as in claim 7, wherein the coil assembly, the valve housing portion, the housing disk, the poppet, the coil assembly and the housing are each configured to provide either a normally open valve or a normally closed valve.

9. The three-port actuation valve as in claim 3, wherein the valve housing is formed by an injection molding process and the housing disk is insert molded into the valve housing and the spool is formed by an injection molding process and the primary plate and the secondary plate are insert molded into the spool.

10. The three-port actuation valve as in claim 1, wherein the central opening of the stem portion further comprises an enlarged area providing fluid communication between the at least one channel and the central opening of the stem portion.

11. The three-port actuation valve as in claim 1, wherein the exhaust valve opening has a chamfered surface that provides a seat for a sealing surface of the poppet, the sealing surface being configured for sealing the exhaust valve opening.

12. The three-port actuation valve as in claim 11, wherein the sealing surface seals the exhaust valve opening when the poppet is in the first position.

13. The three-port actuation valve as in claim 10, further comprising a hydraulic bushing inserted within the central opening of the stem portion and the valve housing has an opening configured to receive a ball and ball retainer assembly for selectively opening and closing the a fluid path between the supply port opening and the control port opening, the ball retainer having resilient features for engaging slots in the opening and a peripheral portion of the ball retainer engaging a lip portion formed by the supply port opening.

14. A method of making either a normally open or a normally closed three-port actuation valve, the method comprising:
molding a valve housing portion, the valve housing portion having a supply port opening, a control port opening and an exhaust port opening each in selective fluid communication with a central opening of the valve housing portion and a housing disk having a portion insert molded into the central opening, the housing disk having an exhaust valve opening in fluid communication with the exhaust port opening and the central opening; and
inserting the valve housing portion and a coil assembly into a frame of the actuation valve, a first end of the coil assembly being adjacent to a disk portion of the housing disk, the coil assembly being formed by insert molding a primary plate and a secondary plate to either end of a spool configured to receive a coil for generating an electromagnetic field to provide either a normally high coil assembly or a normally low coil assembly, the normally low coil assembly having the primary plate at the first end of the spool and the secondary plate at an opposite second end of the spool and the normally high coil assembly having the secondary plate at the first end of the spool and the secondary plate at the second end of the spool and the primary plate of the normally high coil assembly having the same configuration as the primary plate being used in the normally low coil assembly and the secondary plate of the normally high coil assembly having the same configuration as the secondary plate of the normally low coil assembly.

15. The method as in claim 14, wherein the primary plate and the secondary plate are axially aligned by the insert molding of the coil assembly.

16. The method as in claim 14, wherein the coil assembly and the valve housing portion are secured to the frame by a screw plate configured to engage a peripheral portion of the frame when the coil assembly and the valve housing portion are inserted into the frame, the screw plate engaging the peripheral portion of the frame prior to a predetermined force being applied to the housing disk by the coil assembly as the coil assembly is inserted into the frame.

17. The method as in claim 14, wherein the housing disk further comprises a central stem portion and a disk portion, the stem portion having a central opening in fluid communication with the exhaust valve opening and an opening aligned with exhaust port opening and the valve housing portion further comprises a poppet for selectively closing the exhaust valve opening, the poppet being slideably received within the central opening of the stem portion for movement between a first position and a second position and the primary plate and the secondary plate each have a bushing inserted therein the bushings being configured to slidably receive a rod secured to a plunger, the rod making contact with the poppet at one end and a biasing spring at the other end and the poppet is moved from the first position to the second position by movement of the rod.

18. A three-port actuation valve formed by the method of claim 14.

19. The method as in claim 14, wherein the frame further comprises a plurality of tabs configured to engage a portion of the valve housing portion and the coil assembly and the valve housing portion are secured to the frame by a screw plate configured to engage a peripheral portion of the frame when the coil assembly and the valve housing portion are inserted into the frame, the screw plate engaging the peripheral portion of the frame prior to a predetermined force being applied to the housing disk by the coil assembly as the coil assembly is inserted into the frame.

20. A method of making either a normally open or a normally closed three-port actuation valve, the method comprising:
molding a valve housing portion, the valve housing portion having a supply port opening, a control port opening and an exhaust port opening each in selective fluid communication with a central opening of the valve housing portion and a housing disk having a portion insert molded into the central opening, the housing disk having an exhaust valve opening in fluid communication with the exhaust port opening and the central opening;
inserting a first bushing into an opening of a primary plate;
insert molding the primary plate and a secondary plate to either end of a spool configured to receive a coil for generating an electromagnetic field to provide a either a normally high coil assembly or a normally low coil assembly, the normally low coil assembly having the primary plate at a first end of the spool and the secondary plate at an opposite second end of the spool and the normally high coil assembly having the secondary plate at the first end of the spool and the secondary plate at the second end of the spool;
winding the coil about the spool;
inserting a rod into a plunger to provide a plunger assembly;
inserting the plunger assembly into a central opening of either the normally high coil assembly or the normally low coil assembly, a first portion of the rod being slidably received within the first bushing;
inserting a second bushing into an opening in the secondary plate, the second bushing slidably receiving a second portion of the rod;
inserting a poppet for selectively closing the exhaust valve opening, into the central opening of the housing disk, a portion of the poppet being slidably received within a bushing inserted into the housing disk;
inserting a supply port valve assembly into the housing the supply port valve assembly being configured to selectively open and close the supply port in response to movement of the poppet;
inserting the valve housing portion into a frame portion;
inserting the coil assembly into the frame portion so that the first end is adjacent to the housing disk; and
securing a screw plate to the frame portion, the screw plate securing the coil assembly and the valve housing portion to the frame.

21. The method as in claim 20, wherein the poppet has a sealing portion being configured for sealing the exhaust valve opening and the primary plate of the normally high coil assembly having the same configuration as the primary plate being used in the normally low coil assembly and the secondary plate of the normally high coil assembly having the same configuration as the secondary plate of the normally low coil assembly.

22. The method as in claim 20, wherein the screw plate is configured to engage a peripheral portion of the frame as the coil assembly and the valve housing portion is inserted into the frame, the screw plate engaging the peripheral portion of the frame prior to a predetermined force being applied to the housing disk and the coil assembly by the screw plate and the frame comprises features for engaging the screw plate after the screw plate has been inserted into the frame.

23. A three-port actuation valve formed by the method of claim 20.
